# EUROPEAN PATENT APPLICATION

(11) **EP 2 386 205 A1**
(43) Date of publication of application: **16.11.2011**
(21) Application number: 10005103.6
(22) Date of filing: 14.05.2010
(51) Int. Cl.: A21B 3/15

(54) **Tray pan divider**

(71) Applicant: Electrolux Home Products Corporation N.V., 1130 Brussel (BE)
(72) Inventor: Heisswolf, Bernd, 91541 Rothenburg (DE); Roth, Ola, 90419 Nürnberg (DE); Meyer, Kerstin, 91616 Neusitz (DE); Knöchner, Michael, 90455 Nürnberg (DE)
(74) Representative: Baumgartl, Gerhard Willi

(57) **Abstract**

A baking tray (10) comprising a baking surface (12) defined by upwardly protruding side seams (14, 16, 18, 20), and at least a first separating wall (24) and a second separating wall (25) for selectively dividing the baking surface (12) in partial baking surfaces (12a, 12b, 12c), wherein the first separating wall (24) and the second separating wall (25) are configured in such a manner, that they can be fixed at the baking tray (10) in lateral relation to each other, in particular at right angle.

## Description

### TECHNICAL FIELD

The present invention refers to a baking tray comprising a baking surface defined by upwardly protruding side seams, and at least a first separating wall and a second separating wall for selectively dividing the baking surface in partial baking surfaces.

A baking tray of the above-mentioned kind is known for example from DE-A-10 2004 039 256. The baking tray disclosed therein comprises a baking surface, which is defined by upwardly protruding side seams. The baking surface can selectively be divided in two partial baking surfaces by attaching a separating wall at opposing side seams. According to one aspect, the separating wall can be clipped on the side seams by means of respective clipping elements provided at the free side ends of the separating wall, which encompass the assigned side seam. Alternatively, the separating wall can be provided at either of its free side ends with a hook-like projection, which can be hooked in opposing recesses provided at opposite side seams. According to DE-A-10 2004 039 256 two or more separating walls of identical design can be arranged in parallel to each other in order to create three or more partial baking surfaces.

Starting from this prior art it is an object of the present invention to provide a baking tray of the above mentioned kind, which has an alternative construction and which allows a flexible division of the baking surface into partial baking surfaces.

According to the present invention this object is solved by providing a baking tray of the above-mentioned kind, which is characterized in that the first separating wall and the second separating wall are configured in such a manner, that they can be fixed at the baking tray in lateral relation to each other, in particular at right angle.

Thanks to the fact that the first separating wall and the second separating wall can be fixed at the baking tray in lateral relation to each other, a very flexible division of the baking surface in partial baking surfaces is rendered possible.

According to one aspect of the present invention the first separating wall is provided at either of its free side ends with a projection, wherein the projections engage with opposing recesses, in particular holes, provided at opposite side seams, when the first separating wall is arranged at the baking tray. Accordingly, a simple plug connection is achieved.

The projections of the first separating wall may have a hook-like form in order to achieve a good fixation of the first separating wall at the assigned side seams.

According to a further aspect of the present invention the second separating wall is provided at either of its free side ends with a projection, wherein one projection engages a recess provided at one of the side seams and one projection engages a recess provided at the first separation wall, when the second separation wall is arranged at the baking tray. In other words, the second separating wall is configured in such a manner that it is fixed between a side seam and the first separation wall.

The recess of the second separating wall, which faces the side seam in the assembled condition, can have a hook-like form in order to enhance the connection between the second separating wall and the side seam.

According to a further aspect of the present invention the projection of the second separating wall, which faces the first separation wall in the assembled condition, is formed straight with no undercuts and protrudes into the recess by not more than the half of the depth of the recess. Accordingly, the recess of the first separation wall can receive the projections of two separation walls, which are arranged in alignment with each other.

Preferably, the first separating wall is provided with a plurality of spaced apart recesses in order to enlarge the number of possible divisions of the baking surface in partial baking surfaces.

For the same reason, each side seam can be provided with a plurality of spaced apart recesses, in particular holes.

Preferably, several separating walls, e.g. several first separating walls and several second separating walls, of the same and/or of different length can be provided in order to further enhance the division possibilities.

The separating walls are preferably made of a non-stick material, in particular polytetrafluorethylene.

Further features and advantages of the present invention will become apparent by means of the following description of a baking tray according to an embodiment of the present invention with reference to the accompanying drawing. In the drawing
- FIG 1: is a perspective view of a baking tray according to an embodiment of the present invention;
- FIG 2: is an enlarged view of detail II in FIG 1;
- FIG 3: is a perspective view of a first separating wall of the baking tray shown in FIG 1;
- FIG 4: is a perspective view of a second separating wall of the baking tray shown in FIG 1; and
- FIG 5: is an enlarged view of detail V in FIG 1 from a different perspective.

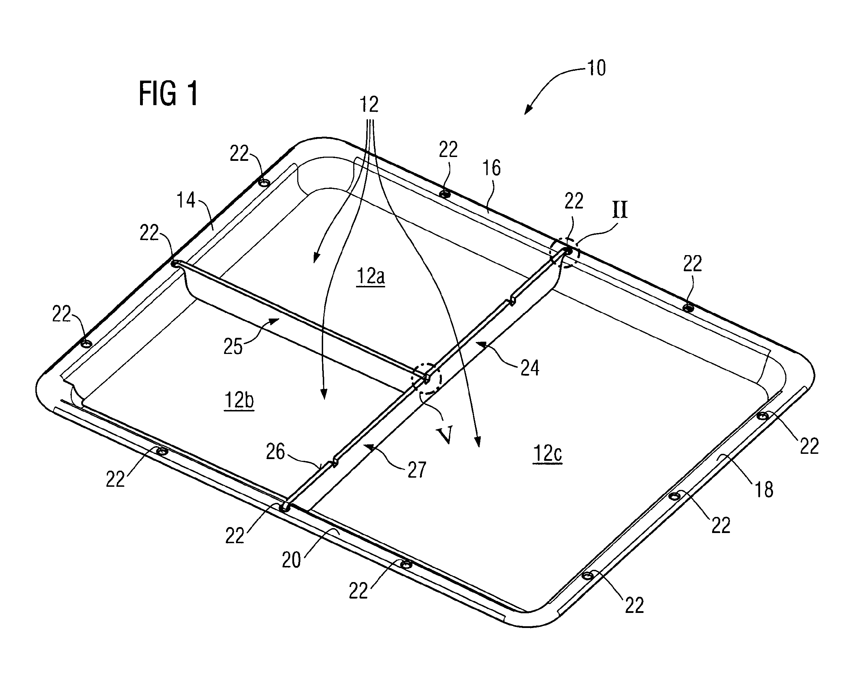

FIGs 1 to 5 show a baking tray 10 according to an embodiment of the present invention. The baking tray 10 comprises a rectangular baking surface 12, which is defined by side seams 14, 16, 18 and 20 upwardly protruding therefrom. The baking surface 12 and the side seams 14, 16, 18 and 20 are integrally made of a non-stick material. Alternatively, the baking surface 12 and the side seams 14, 16, 18 and 20 can be coated with such a material. Along the side seams 14, 16, 18 and 20 a plurality of recesses 22 in the form of through holes 22 is provided. These through holes 22 are spaced apart from each other by a predetermined distance, wherein the through holes 22 of opposite side seams 14, 18 and 16, 20 are arranged in an opposing relationship.

Moreover, the baking tray 10 comprises a first separating wall 24 and a second separating wall 25.

The first separating wall 24 is a longish plate element made of a non-stick material. Alternatively, the first separating wall 24 can be coated with such a material. It comprises two main surfaces 26 and 27, a lower edge 28, an upper edge 30 extending in parallel to the lower edge 28, and two side edges 32 and 34, whose contours are matched with the inner contours of the opposite side seams 16 and 20. At its free side ends, more precisely in the upper portions of the side edges 32 and 34, the first separating wall 24 is provided with hook-like and downwardly bent projections 36 and 38. Moreover, three spaced apart recesses 39 are formed at the upper edge 30.

The second separating wall 25 is a longish plate element made of a non-stick material. Alternatively, the second separating wall 25 can be coated with such a material. It comprises two main surfaces 40 and 41, a lower edge 42, an upper edge 44, which extends in parallel to the lower edge 42, as well as two side edge 46 and 48. The contour of the side edge 46 is essentially matched to the contours of the opposite side seams 14 and 18. The contour of the other side edge 48 of the second separating wall 25 is essentially matched with the contour of the main surface 26 of the first separating wall 24. At the free side ends of the second separating wall 25, more precisely in the upper portion of the side edges 46 and 48, projections 50 and 52 are formed. The projection 50 has a hook-like form, which is downwardly bent. The projection 52 is formed straight with no undercuts.

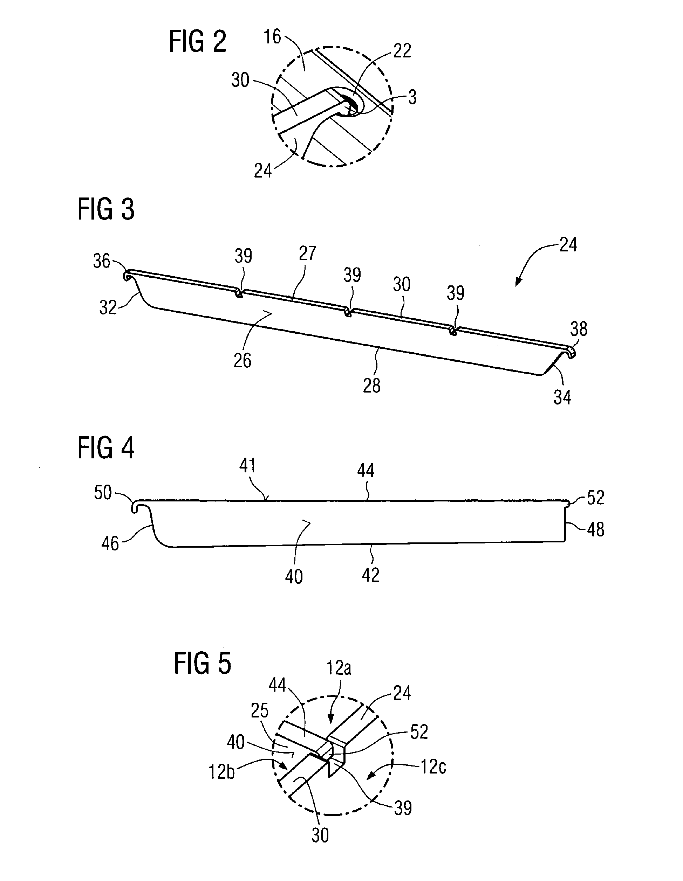

In order to divide the baking surface 12 in three partial baking surfaces 12a, 12b and 12c as it is shown in FIG 1, the first separating wall 24 is arranged by inserting its projections 36 and 38 in opposing through holes 22 of the opposite side seams 16 and 20. Thereafter, the second separating wall 25 is arranged at right angle with respect to the first separating wall 24 by inserting the hook-like projection 50 in the middle through hole 22 of the side seam 14 and by inserting its projection 52 in the middle recess 39 of the first separating wall 24. In the assembled state of the second separating wall 25, its straight projection 52 protrudes into the recess 39 of the first separating wall 24 by not more than the half of the depth of the recess 39, as it is shown in FIG 5. Accordingly, the recess 39 of the first separating wall 24 can receive a further straight projection of a second separating wall, whose design corresponds to the second separating wall 25 and which is arranged in alignment therewith. Alternatively, the second separating wall 25 can be engaged with one of the other through holes 22 of the side seam 14 and with the opposing recess 39 of the first separating wall 24.

It should be noted that several separating walls of the same and/or of different length can be provided, i.e. several first separating walls 24 of the same length and/or several second separating walls 25 of the same length or of different length. The more separating walls are provided the more possibilities are given in order to separate the baking surface 12 in different partial baking surfaces.

## Claims

1. A baking tray (10) comprising a baking surface (12) defined by upwardly protruding side seams (14, 16, 18, 20), and at least a first separating wall (24) and a second separating wall (25) for selectively dividing the baking surface (12) in partial baking surfaces (12a, 12b, 12c), **characterized in that** the first separating wall (24) and the second separating wall (25) are configured in such a manner, that they can be fixed at the baking tray (10) in lateral relation to each other, in particular at right angle.

2. Baking tray (10) according to claim 1, **characterized in that** the first separating wall (24) is provided at either of its free side ends with a projection (36, 38), wherein the projections (36, 38) engage with opposing recesses (22), in particular holes, provided at opposite side seams (16, 20), when the first separating wall (24) is arranged at the baking tray (10).

3. Baking tray (10) according to claim 2, **characterized in that** the projections (36, 38) of the first separating wall (24) have a hook-like form.

4. Baking tray (10) according to one of the forgoing claims, **characterized in that** the second separating wall (25) is provided at either of its free side ends with a projection (50, 52), wherein one projection (50) engages a recess (22) provided at one of the side seams (14) and one projection (52) engages a recess (39) provided at the first separation wall (24), when the second separation wall (25) is arranged at the baking tray (10).

5. Baking tray (10) according to claim 4, **characterized in that** the recess (50) of the second separating wall (25), which faces the side seam (14) in the assembled condition, has a hook-like form.

6. Baking tray (10) according to claim 4 or 5, **characterized in that** the projection (52) of the second separating wall (25), which faces the first separation wall (24) in the assembled condition, is formed straight with no undercuts and protrudes into the recess (39) by not more than the half of the depth of the recess (39).

7. Baking tray (10) according to one of the claims 4 to 6, **characterized in that** the first separating wall (24) is provided with a plurality of spaced apart recesses (39).

8. Baking tray (10) according to one of the foregoing claims, **characterized in that** each side seams (14, 16, 18, 20) is provided with a plurality of spaced apart recesses (22), in particular holes.

9. Baking tray (10) according to one of the foregoing claims, **characterized in that** several separating walls of (24, 25) the same and/or of different length are provided.

10. Baking tray (10) according to one of the foregoing claims, **characterized in that** the separating walls (24, 25) are made of a non-stick material, in particular polytetrafluorethylene.
